# EUROPÄISCHE PATENTSCHRIFT

(11) **EP 2 894 073 B1**
(45) Veröffentlichungstag und Bekanntmachung des Hinweises auf die Patenterteilung: **20.03.2019**
(21) Anmeldenummer: 14198121.7
(22) Anmeldetag: 16.12.2014
(51) Int. Cl.: B61D 17/02, B61D 17/22, B61D 17/20

(54) **Schienenfahrzeug mit wenigstens zwei Wagenkästen**
Rail vehicle having at least two carriages
Véhicule sur rail équipé d'au moins deux superstructures

(30) Priorität: 09.01.2014 DE 102014200175
(43) Veröffentlichungstag der Anmeldung: 15.07.2015
(73) Patentinhaber: Siemens Mobility GmbH, 81739 München (DE)
(72) Erfinder: Schiefer, Benno, 40233 Düsseldorf (DE)

(56) Entgegenhaltungen:
- EP-A1- 0 539 904
- EP-A1- 2 371 652
- DE-A1- 3 704 127
- DE-A1-102011 003 025
- DE-U1-202009 004 538
- DE-U1-202010 001 793
- JP-A- 2003 019 954

## Beschreibung

Die Erfindung bezieht sich auf ein Schienenfahrzeug mit wenigstens zwei Wagenkästen, wobei ein voreilender Wagenkasten an seinem Heckende einen Einzug aufweist.

Zur Einhaltung von vorgegebenen Lichtraumprofilen in Gleisbögen weisen manche Schienenfahrzeuge eingezogene Wagenkastenenden auf.

Dies hat zur Folge, dass an den Seitenwänden und im Dachbereich des Schienenfahrzeugs entlang strömender Fahrtwind in einen Zwischenraum zwischen beispielsweise einem voreilenden und einem nacheilenden Wagenkasten gedrückt wird, so dass ein Staudruck entsteht, der eine Bremswirkung auf das Schienenfahrzeug ausübt. Diese Problematik macht sich besonders bei Hochgeschwindigkeitszügen bemerkbar, bei denen bisher jedoch die auftretenden Druck-/Strömungsverluste in Kauf genommen werden. Ein Beispiel eines Schienenfahrzeuges mit wenigstens zwei Wagenkasten geht aus dem Dokument DE 10 2011 003 025 A1 als bekannt hervor.

Ausgehend hiervon liegt der Erfindung die Aufgabe zugrunde, ein Schienenfahrzeug der eingangs genannten Art derart weiterzuentwickeln, dass sich in einem Wagenübergangsbereich aerodynamisch günstigere Verhältnisse geschaffen werden.

Diese Aufgabe wird bei dem oben beschriebenen Schienenfahrzeug dadurch gelöst, dass zum Vermeiden eines Staudrucks im Bereich eines Wagenübergangs zwischen den wenigstens zwei Wagenkästen seitliche Flanken des Gerätegehäuses zum Heckende des voreilenden Wagenkastens hin, bezogen auf das Gerätegehäuse, in einem horizontalen Bogen auswärts verlaufen, so dass an den Flanken anströmender Fahrtwind am Heckende des Wagenkastens in Längsrichtung des Wagenkastens oder weiter nach außen gerichtet ist, und das ein Gerätegehäuse am Heckende auf ein Dach des Wagenkasten gesetzt und an den Einzug am Heckende angepasst geformt ist.

Aufgrund der besonderen Formgebung für die Flanken des Gerätegehäuses wird anströmender Fahrtwind am Heckende des voreilenden Wagenkastens wenigstens in Längsrichtung des Wagenkastens umgelenkt, gegebenenfalls auch noch weiter nach außen. Dadurch wird im Bereich des Gerätegehäuses die Ausbildung eines Staudrucks im Wagenübergangsbereich wirksam vermindert.

Bevorzugt verlaufen die seitlichen Flanken des Gerätegehäuses zum Heckende des voreilenden Wagenkastens hin horizontal S-förmig, wobei die Flanken zunächst in einem Bogen einwärts und daran anschließend in einem Bogen auswärts verlaufen. Diese Ausführungsform hat den Vorteil gegenüber einer Ausführungsform, bei der die Flanken in Richtung auf das Heckende ausschließlich nach außen verlaufen, dass sich ein ästhetisch ansprechenderes Gesamtbild des Heckendes des Schienenfahrzeugs ergibt. Die gewählte S-Form ist weniger auffällig, hat jedoch auch die gewünschte Wirkung der Umlenkung des Fahrtwinds am Heckende des Wagenkastens in Längsrichtung desselben oder weiter nach außen.

Untere Kanten und obere Kanten der Flanken des Gerätegehäuses können gerade und vertikale Zwischenabschnitte zwischen den oberen und den unteren Kanten der Flanken können horizontal S-förmig verlaufen. Durch die Beibehaltung der eingezogenen Ausgangsform des Gerätegehäuses am Heckende im Bereich der unteren und oberen Kanten ergibt sich ein optisch fließender Übergang zwischen dem Gerätegehäuse und angrenzenden Seitenwänden des Schienenfahrzeugs. Insbesondere können die Flanken des Gerätegehäuses kontinuierlich und krümmungsstetig an obere Seitenwandabschnitte des Wagenkastens anschließen.

Im Hinblick auf die aerodynamischen Eigenschaften zweier, hintereinander angeordneter Wagenkästen ist es von Vorteil, wenn auf das Dach des nacheilenden Wagenkastens an dessen Bugende ein Gerätegehäuse gesetzt ist und das Bugende des nacheilenden Wagenkastens einschließlich des zugeordneten Endabschnitts des Gerätegehäuses bezüglich einer mittleren vertikalen Querebene des Wagenübergangs zwischen den Wagenkästen spiegelsymmetrisch zu dem Heckende des voreilenden Wagenkastens einschließlich des zugeordneten Gerätegehäuses ausgebildet ist.

Auf diese Weise wird es ermöglicht, dass anströmender Fahrtwind von dem Gerätegehäuse des voreilenden Wagenkastens aus tangential eine Oberfläche des Gerätegehäuses am Bugende des nacheilenden Wagenkastens anströmt. Dann ergeben sich günstige aerodynamische Eigenschaften für den Wagenübergang zwischen den beiden Wagenkästen.

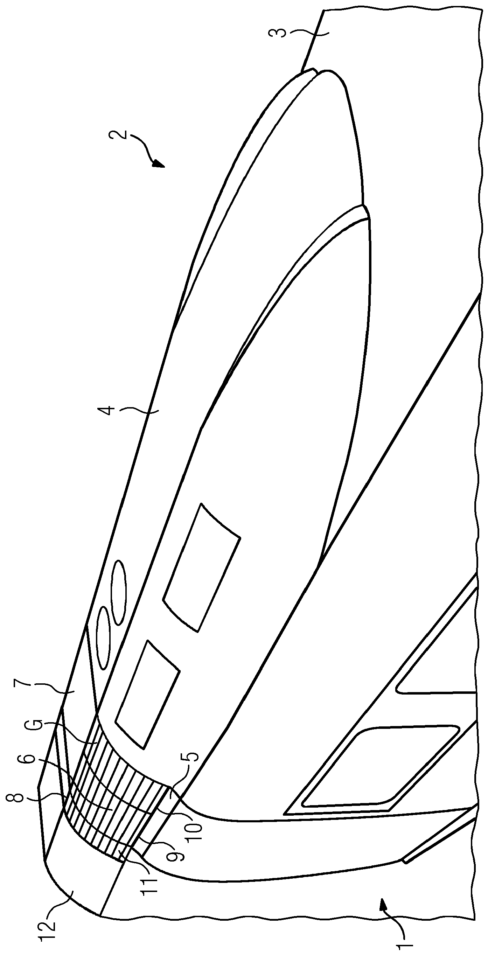

Ein Ausführungsbeispiel der Erfindung wird nachfolgend unter Bezugnahme auf die Zeichnung noch näher erläutert. Die einzige Figur zeigt eine perspektivische Ansicht eines Heckendes eines Wagenkastens.

Die Figur veranschaulicht ein Heckende 1 eines voreilenden Wagenkastens eines Schienenfahrzeugs. Ein Hauptkörper 2 des Wagenkastens zeigt einen gleichbleibenden Abstand zwischen Seitenwänden über die Länge des Wagenkastens, während im Bereich des Heckendes 1 dort angeordnete Seitenwandabschnitte eingezogen sind, so dass sich im Bereich des Heckendes 1 ein Querschnitt des Wagenkastens in seiner horizontalen Erstreckung verkleinert.

Auf einem Dach 3 des Wagenkastens ist, vom Heckende 1 ausgehend, ein Gerätegehäuse 4 aus Glasfaser verstärktem Kunststoff (auch andere Materialien sind möglich) angeordnet, bei dem es sich um die Verkleidung eines Frischwassertanks handeln kann. Im Bereich des Heckendes 1, das den Einzug zeigt, folgt ein unterer Kantenbereich 5 des Gerätegehäuses 4 dem eingezogenen Verlauf des Heckendes 1 im Bereich der Seitenwände. Oberhalb des unteren, geraden Kantenbereichs 5 des Gerätegehäuses 4 ist auf beiden Seiten jeweils eine Flanke 6 des Gerätegehäuses 4 vorgesehen, die sich in Umfangsrichtung des Gerätegehäuses 4 bogenförmig bis zu einem horizontalen Gerätegehäuseabschnitt 7 zwischen den Flanken 6 erstreckt. Eine Übergangs linie zwischen dem horizontalen Gerätegehäuseabschnitt 7 am Heckende 1 und einer der Flanken 6 wird als obere Kante 8 der Flanke 6 angesehen. Diese obere Kante 8 verläuft ebenso horizontal geradlinig wie der untere Kantenbereich 5, allerdings ist der untere Kantenbereich 5 parallel zum Einzug geneigt und die obere Kante 8 liegt parallel zur Schienenachse.

Der untere Kantenbereich 5 schließt sich kontinuierlich an einen oberen Seitenwandabschnitt am Heckende 1 an, was eine ansprechende optische Gestaltung des Wagenkastens zur Folge hat. Unmittelbar oberhalb des unteren Kantenbereichs 5 zeigt die Flanke 6 einen horizontal S-förmigen Verlauf, wobei von dem Heckende 1 aus die Flanke 6 zunächst in einem Bogen auswärts und anschließend in einem Bogen einwärts verläuft, jeweils bezogen auf das Gerätegehäuse 4. Anders ausgedrückt, wird die Flanke vom Einzugsknick aus lediglich tangential weitergeführt - folgt also nicht dem Einzugsknick - geht dann nach innen und dann wieder in eine geradlinige Kurve über, die ebenfalls tangential am Heckende wieder aufgegriffen wird. Der einwärts gerichtete Bogen 10 schließt an einen geraden Abschnitt des Gerätegehäuses 4 an, der sich in Längsrichtung des Gerätegehäuses 4 weiter bis zum Ende desselben erstreckt.

Die horizontal S-förmige Gestaltung der Flanke 6 ist in der Figur durch ein Gitterfeld G veranschaulicht. Daraus wird ersichtlich, dass der horizontal S-förmige Verlauf vom unteren Kantenbereich 5 aus in Richtung auf den horizontalen Gerätegehäuseabschnitt 7 immer weniger stark ausgeprägt ist und in der geraden, oberen Kante 8 endet.

Im dargestellten Ausführungsbeispiel sind die Krümmungen des auswärts gerichteten Bogens 9 und des einwärts gerichteten Bogens 10 so gewählt, dass anströmender Fahrtwind entlang der Bogen 10, 9 geführt wird und den Bogen 9 etwa in Längsrichtung des Wagenkastens (also parallel zum Wagenkasten)verlässt. Dies hat zur Folge, dass in einem Übergangsbereich 11 zwischen dem Wagenkasten, der als voreilender Wagenkasten angesehen wird. Im dargestellten Ausführungsbeispiel ist von dem nacheilenden Wagenkasten lediglich ein an den Wagenübergangsbereich 11 anschließender Längsabschnitt eines Gerätegehäuses 12 dargestellt. Der dargestellte Abschnitt des Gerätegehäuses 12 des nacheilenden Wagenkastens ist spiegelsymmetrisch zur Ausbildung des Gerätegehäuses 4 am Heckende des voreilenden Wagenkastens geformt, und zwar bezüglich einer vertikalen, mittleren Querebene des Wagenübergangsbereichs 11. In dieser Weise wird erreicht, dass Fahrtwind auf einer Außenseite des Gerätegehäuses 4 tangential zu einer Außenseite des Gerätegehäuses 12 des nacheilenden Wagenkastens gelangt. Es kann sinnvoll sein, die Kontur nicht einfach tangential im Übergangsbereich ausströmen zu lassen, sondern sogar leicht nach außen abzulenken. Dies ist insbesondere für Kurvenfahrt günstig im Hinblick auf Staudruckverringerung.

## Patentansprüche

1. Schienenfahrzeug mit wenigstens zwei Wagenkästen, wobei ein voreilender Wagenkasten an seinem Heckende (1) einen Einzug aufweist, **dadurch gekennzeichnet dass** ein Gerätegehäuse (4) am Heckende (1) auf ein Dach (3) des Wagenkastens gesetzt und an den Einzug am Heckende (1) angepasst geformt ist, und dass zum Vermeiden eines Staudrucks im Bereich eines Wagenübergangs (11)zwischen den wenigstens zwei Wagenkästen seitliche Flanken (6) des Gerätegehäuses (4)zum Heckende (1) des voreilenden Wagenkastens hin, bezogen auf das Gerätegehäuse(4), in einem horizontalen Bogen auswärts verlaufen, so dass an den Flanken (6) anströmender Fahrtwind am Heckende (1) des Wagenkastens in Längsrichtung des Wagenkastens oder weiter nach außen gerichtet ist.

2. Schienenfahrzeug nach Anspruch 1,
**dadurch gekennzeichnet, dass**
die Flanken (6) des Gerätegehäuses (4) zum Heckende (1) des voreilenden Wagenkastens hin horizontal S-förmig verlaufen, wobei die Flanken (6), bezogen auf das Gerätegehäuse, zunächst in einem Bogen (10) einwärts und daran anschließend in dem Bogen (9) auswärts verlaufen.

3. Schienenfahrzeug nach Anspruch 1 oder 2,
**dadurch gekennzeichnet, dass**
untere Kantenbereiche (5) und obere Kantenbereiche (8) der Flanken (6) des Gerätegehäuses (4) gerade und vertikale Zwischenabschnitte zwischen den oberen (8) und den unteren Kantenbereichen (5) der Flanken horizontal S-förmig verlaufen.

4. Schienenfahrzeug nach einem der Ansprüche 1 bis 3, **dadurch gekennzeichnet, dass**
die Flanken (6) des Gerätegehäuses (4) kontinuierlich an obere Seitenwandabschnitte des Wagenkastens anschließen.

5. Schienenfahrzeug nach einem der Ansprüche 1 bis 4, **dadurch gekennzeichnet, dass**
auf das Dach des nacheilenden Wagenkastens an dessen Bugende ein Gerätegehäuse (12) gesetzt ist und das Bugende des nacheilenden Wagenkastens einschließlich des zugeordneten Endabschnitts des Gerätegehäuses (12) bezüglich einer mittleren vertikalen Querebene des Wagenübergangs (11) zwischen den Wagenkästen spiegelsymmetrisch zu dem Heckende (1) des voreilenden Wagenkastens einschließlich des zugeordneten Gerätegehäuses (4) ausgebildet ist.

## Claims

1. Rail vehicle having at least two carriage bodies, wherein a leading carriage body has a drawn-in portion at its rear end (1), **characterized in that** an equipment housing (4) is placed on a roof (3) of the carriage body at the rear end (1) and is shaped so as to be adapted to the drawn-in portion at the rear end (1), and **in that**, in order to avoid a back pressure in the region of a carriage transition (11) between the at least two carriage bodies, lateral flanks (6) of the equipment housing (4) extend outwards, with respect to the equipment housing (4), in a horizontal arc towards the rear end (1) of the leading carriage body, with the result that relative wind at the rear end (1) of the carriage body that impinges against the flanks (6) is directed in the longitudinal direction of the carriage body or further outwards.

2. Rail vehicle according to Claim 1,
**characterized in that**
the flanks (6) of the equipment housing (4) extend in a horizontally S-shaped manner towards the rear end (1) of the leading carriage body, wherein the flanks (6) first extend inwards in an arc (10) and subsequently outwards in the arc (9) with respect to the equipment housing.

3. Rail vehicle according to Claim 1 or 2,
**characterized in that**
lower edge regions (5) and upper edge regions (8) of the flanks (6) of the equipment housing (4) extend in a horizontally S-shaped manner rectilinear and vertical intermediate portions between the upper (8) and the lower edge region (5) of the flanks.

4. Rail vehicle according to one of Claims 1 to 3,
**characterized in that**
the flanks (6) of the equipment housing (4) continuously adjoin upper side wall portions of the carriage body.

5. Rail vehicle according to one of Claims 1 to 4,
**characterized in that**
an equipment housing (12) is placed on the roof of the trailing carriage body at the front end thereof, and the front end of the trailing carriage body, including the assigned end portion of the equipment housing (12), is designed, with respect to a central vertical transverse plane of the carriage transition (11) between the carriage bodies, to be mirror-symmetrical to the rear end (1) of the leading carriage body, including the assigned equipment housing (4).

## Revendications

1. Véhicule ferroviaire ayant au moins deux caisses, dans lequel une caisse en avant a, à son extrémité (1) arrière, un renfoncement, **caractérisé en ce qu'**un boîtier (4) d'appareil est mis à l'extrémité (1) arrière sur un toit (3) de la caisse et est conformé de manière adaptée au renfoncement à l'extrémité (1) arrière,
et **en ce que**, pour éviter une pression dynamique dans la région d'une transition (11) de voiture, entre les au moins deux caisses, des flancs (6) latéraux du boîtier (4) d'appareil s'étendent vers l'extrémité (1) arrière de la caisse en avant, rapportés au boîtier (4) d'appareil, vers l'extérieur suivant un arc horizontal, de manière à ce que le vent relatif, passant sur les flancs (6), à l'extrémité (1) arrière de la caisse, soit dirigé dans la direction longitudinale de la caisse ou davantage vers l'extérieur.

2. Véhicule ferroviaire suivant la revendication 1, **caractérisé en ce que**
les flancs (6) du boîtier (4) de l'appareil s'étendent vers l'extrémité (1) arrière de la caisse en avant, en forme de S horizontalement, les flancs (6), rapportés au boîtier de l'appareil, s'étendant d'abord vers l'intérieur suivant un arc (10) et ensuite vers l'extérieur suivant l'arc (9).

3. Véhicule ferroviaire suivant la revendication 1 ou 2, **caractérisé en ce qu'**
entre des parties (5) inférieures de bord et les parties (8) supérieures de bord des flancs (6) du boîtier (4) de l'appareil, des segments intermédiaires droits et verticaux s'étendent en forme de S horizontalement entre les parties (8) de bord supérieures et les parties (5 ) de bord inférieures des flancs.

4. Véhicule ferroviaire suivant l'une des revendications 1 à 3,
**caractérisé en ce que**
les flancs (6) du boîtier (4) de l'appareil se raccordent de manière continue à des segments de paroi latérale supérieurs de la caisse.

5. Véhicule ferroviaire suivant l'une des revendications 1 à 4,
**caractérisé en ce que**
sur le toit de la caisse en avant, est posé, à son extrémité avant, un boîtier (12) d'appareil et l'extrémité avant de la caisse en arrière, y compris du segment d'extrémité associé du boîtier (12) de l'appareil, rapporté à un plan transversal vertical médian de la transition (11) entre les caisses, est constituée de symétrie comme en miroir de l'extrémité (1) arrière de la caisse en avant, y compris du boîtier (4) de l'appareil associé.
